**Europäisches Patentamt**

**European Patent Office**

**Office européen des brevets**

(11) Veröffentlichungsnummer : **0 331 872 B1**

(12) **EUROPÄISCHE PATENTSCHRIFT**

(45) Veröffentlichungstag der Patentschrift :
**05.08.92 Patentblatt 92/32**

(21) Anmeldenummer : **89100432.7**

(22) Anmeldetag : **11.01.89**

(51) Int. Cl.⁵ : **A01F 15/07**

(54) **Rundballenpresse.**

(30) Priorität : **23.02.88 DE 8802337 U**

(43) Veröffentlichungstag der Anmeldung :
**13.09.89 Patentblatt 89/37**

(45) Bekanntmachung des Hinweises auf die
Patenterteilung :
**05.08.92 Patentblatt 92/32**

(84) Benannte Vertragsstaaten :
**AT DE ES FR GB NL SE**

(56) Entgegenhaltungen :
**EP-A- 0 037 155**
**EP-A- 0 125 719**
**EP-A- 0 213 219**
**DE-A- 3 107 744**
**US-A- 2 336 491**

(73) Patentinhaber : **Greenland Geldrop B.V.**
**Nuenenseweg 165**
**NL-5667 KP Geldrop (NL)**

(72) Erfinder : **Berkers, A.**
**Gebr. de Koningstr. 21**
**Heeze (NL)**

(74) Vertreter : **Patentanwälte Grünecker,**
**Kinkeldey, Stockmair & Partner**
**Maximilianstrasse 58**
**W-8000 München 22 (DE)**

**Beschreibung**

Die Erfindung betrifft eine Rundballenpresse gemäß dem Oberbegriff des Patentanspruchs 1.

Bei einer aus der EP-A-0 156 041 bekannten Rundballenpresse ist das Preßelement ein unendliches Band, das aus zwei randseitigen Gliederketten und zwischen diesen verlaufenden Querstäben besteht. Das Preßelement wird in Umfangsrichtung der Preßkammer an mehreren beabstandeten Walzen geführt. Im Einlaßbereich zur Preßkammer sind zwei Umlenkwalzen vorgesehen, zwischen denen sich die bis zur maximalen Preßkammergröße anwachsende Schlaufe bildet. Bei leerer und geschlossener Preßkammer tragen von der Seite eingreifende Nockenglieder das Preßelement derart, daß die Schlaufe in der Mindestgröße der Preßkammer gehalten wird. Nachdem mit dem Wickeln von Erntegut in der Preßkammer begonnen wird und sich der bildende Rundballen dabei vergrößert, wird das Preßelement in der Schlaufe von den Nockenglieder abgehoben und vom Rundballen getragen. Dann stören jedoch die seitlich eingreifenden Nockenglieder den Wickelvorgang und die Drehbewegung des Rundballens erheblich.

Bei anderen, bekannten Rundballenpressen mit einer in der Größe veränderlichen Preßkammer wird die Preßkammer von mehreren nebeneinanderliegenden Riemen begrenzt. Es ist schwierig, die Riemen bei leerer, geschlossener Preßkammer so abzustützen, daß der Wickelbeginn nicht gestört wird und kein Erntegut zwischen den Riemen hindurchfällt.

Bei einer aus der US-A-23 36 491 bekannten Rollballenpresse mit variabler Preßkammer sind zwei endlose Preßelemente vorgesehen, die jeweils aus einem einzigen Band eines flexiblen Materials bestehen. Im auslaßseitigen Spalt zwischen den beiden Preßelementen wird beim Wickeln des Rundballens stets Erntegut mit nach außen genommen. Am Beginn eines Wickelvorganges steht keine Preßkammer in einer Mindestgröße zur Verfügung, so daß sich das anfängliche Wickeln des Kernes des späteren Rollballens verzögert und eine lokale zu starke Verdichtung bzw. ein Stau auftritt. Ein kontinuierliches Arbeiten der Rollballenpresse ist nicht möglich, weil die Erntegutzufuhr während des Einbindesund Auswurfvorganges des fertigen Rollballens unterbrochen und damit die Rollballenpresse angehalten werden muß.

Der Erfindung liegt die Aufgabe zugrunde, eine Rollballenpresse der angegebenen Art zu schaffen, bei der die Form der Preßkammer in ihrer Mindestgröße mit baulich einfachen Mitteln stabilisiert ist und bei der das Wickeln eines Rollballens am Beginn der Wickelphase störungsfrei abläuft. Im übrigen soll die Rollballenpresse einen kontinuierlichen Betrieb gestatten.

Die gestellte Aufgabe wird erfindungsgemäß durch die im kennzeichnenden Teil des Patentanspruchs 1 angegebenen Merkmale gelöst.

Da die Eigensteifigkeit des Preßelementes für das Stehen der Schlaufe in der Mindestgröße der Preßkammer sorgt, findet das am Beginn einer Wickelphase eines neuen Rollballens in die Preßkammer geförderte Erntegut sofort ideale Voraussetzungen zum Bilden eines gleichmäßigen Wickelkerns vor. Die stehende Schlaufe in der Mindestgröße der Preßkammer gibt eine zylindrische Form vor, die für die gleichmäßige Verdichtung des Erntegutes wichtig ist. Da zum Halten der Schlaufe in der Mindestgröße der Preßkammer keine seitlich eingreifenden Komponenten benötigt werden, wird der Beginn der Wickelphase auch in diesen kritischen Bereichen nicht gestört. An dem als durchgehendes Gummi- oder Kunststoffband ausgebildeten Preßelement wird dem Erntegut eine relativ glatte Fläche dargeboten, an der sich das Erntegut nicht verhängen kann, und durch die das Erntegut auch nicht aus der Preßkammer auszutreten vermag. Über die gesamte Wickelphase wird auf das Erntegut gleichmäßig Druck in radialer Richtung ausgeübt, was zu einer wirksamen Verdichtung und einer wünschenswert glatten Umfangsfläche des Rundballens führt. Die Eigensteifigkeit des Preßelementes gestattet zwar die Umlenkung um die Walzen benachbart zum Einlaß; sie ist jedoch so groß, daß die Schlaufe in der Mindestgröße der Preßkammer nicht in sich zusammenfällt. Es läßt sich eine großvolumige und breite Preßkammer realisieren, die einen Ausstoß qualitativ hochwertiger und großer Rundballen ermöglicht.

Der lange Zuführkanal gestattet in Verbindung mit der speziellen Ausbildung des Preßelementes einen kontinuierlichen Betrieb der Rollballenpresse, weil das während des Einbindens und Auswerfens des fertigen Rollballens weitergeförderte Erntegut dort zwischengespeichert werden kann.

Zweckmäßig sind verstärkende Einlagen im Gummi- oder Kunststoffband, die die Zugfestigkeit einerseits und die gewünschte Eigensteifigkeit andererseits erreichen lassen. Die Einlagen können Gewebeeinlagen oder auch Drahtgeflechte ähnlich den Einlagen in Keilriemen oder Reifen sein, die in das Gummi- oder Kunststoffband unterhalb der freien Oberflächen einvulkanisiert oder eingehaftet sind.

Wichtig sind ferner die Maßnahmen gemäß Anspruch 3, weil mit dem in Längsrichtung zugfesten Preßelement durch eine vorgewählte Vorspannung des Preßelementes ein hoher Verdichtungsdruck auf den Rundballen ausübbar ist, ohne daß alle Walzen zur Druckerzeugung herangezogen werden müßten. Die hohe Biegesteifigkeit in Querrichtung erleichtert das Abstützen des Preßelementes in seinen Randbereichen, so daß es in der Mitte seiner Quererstreckung nicht unzweckmäßig durchhängt, sobald die Preßkammer leer ist

2

oder beim Öffnen oder Schließen der Preßkammer die Längsspannung im Preßelement vorübergehend reduziert wird.

Ein weiterer, wichtiger Gesichtspunkt ist in Anspruch 4 enthalten. Diese vorgewählte Zugspannung braucht nur von zweien der Walzen aufgenommen zu werden. Die anderen Walzen werden beim Wickeln und Komprimieren überhaupt nicht oder nur gering belastet. Die Rundballenpresse benötigt dadurch weniger Walzen, was die Herstellungskosten und den Arbeitsaufwand bei der Herstellung der Rundballenpresse reduziert. Außerdem wird der Vorteil erreicht, daß an der Außenumfangsfläche eines Rundballens ein geringerer Rollwiderstand auftritt, was für alle mechanisch belasteten Elemente der Presse vorteilhaft ist.

Alternativ dazu wird bei einer Ausführungsform mit in Festlagern abgestützten Walzen eine hohe Verdichtung und damit eine hohe Festigkeit im Außenumfangsbereich des Rundballens erreicht. Die Spannung oder Vorspannung des Preßelementes kann in diesem Fall reduziert werden.

Bei der Ausführungsform nach Anspruch 6 wird durch die radial beweglichen Loslager für die Walzen trotz einer relativ niedrigen Spannung im Preßelement eine hohe Verdichtung und feste Oberfläche im Umfangsbereich des Rundballens ermöglicht. Günstig sind die niedrigen oder vernachlässigbaren Biegespannungen in den in den Loslagern gehaltenen Walzen. Auch wird der Drehwiderstand des Rundballens verringert.

Bei einer vorteilhaften Ausführungsform sind den beiden Walzen beiderseits des Einlasses parallele Gegenwalzen zugeordnet, die Walzenspalte definieren und sozusagen die Enden der Schlaufe in der Mindestgröße der Preßkammer halten, damit die Schlaufe die Eigensteifigkeit des Preßelementes ausnutzen und in der vorbestimmten Form stehen kann, die einem Zylinder angenähert ist.

Zweckmäßig ist ferner die Ausführungsform gemäß Anspruch 8, weil die mit dem Geschwindigkeitsüberschuß gegenüber der Wickelgeschwindigkeit angetriebene Gegenwalze nach dem Auswerfen eines fertigen Rundballens und beim Schließen der Preßkammer das sich zumindest teilweise entspannende Preßelement im Einlaßbereich schneller der Schlaufe zuführt, als es aus dem Einlaßbereich weggezogen wird, so daß die Schlaufe rasch geformt wird und in der gewünschten Form steht, wenn das Erntegut wieder einzutreten beginnt.

Wichtig sind dabei die Merkmale von Anspruch 9, weil mit diesen Maßnahmen das Preßelement mit einer Bewegungskomponente aus dem Walzenspalt durch den Einlaß in die Preßkammer gefördert wird, die in das Innere der zu bildenden Schlaufe zielt, so daß mit der Eigensteifigkeit des Preßelementes die gebildete Schlaufe sofort in die gewünschte Form gezwungen wird.

Zweckmäßigerweise befindet sich die antreibbare Gegenwalze im stationären Pressenteil, während die vorzugsweise freilaufende Walze im aufklappbaren Preßkammerteil angeordnet ist. Damit wird erreicht, daß die Gegenwalze die Walze beim Aufstellen der Schlaufe mitnimmt, wodurch die Reibbbelastung des Preßelementes gering bleibt. Ferner wird dadurch der Vorteil erzielt, daß die Walze im aufklappbaren Preßkammerteil von der Gegenwalze abgerückt wird, sobald der Rundballen soweit gewachsen ist, daß er den aufklappbaren Preßkammerteil geringfügig vom stationären Pressenteil abhebt.

Alternativ dazu ist es auch zweckmäßig, zwischen dem Antrieb und der Gegenwalze eine Rutschkupplung vorzusehen, die selbsttätig dafür sorgt, daß sich die Gegenwalze nur mehr mit der Wickelgeschwindigkeit dreht, sobald die Schlaufe ordnungsgemäß in der Mindestgröße steht. Die Rutschkupplung ist zweckmäßigerweise nur so stark eingestellt, daß das Drehmoment der Gegenwalze nicht ausreicht, die Spannwalze des Preßelementes zu bewegen.

Günstig ist es ferner, die Oberfläche der Gegenwalze reibungsaktiv auszubilden, damit das Preßelement wirkungsvoll in die Schlaufe geschoben wird. Allerdings ist dann im Antriebsweg für die Gegenwalze eine Überlastkupplung zweckmäßig.

Bei der Ausführungform gemäß Anspruch 13 führt das Trennelement zu einer Zwischenspeicherfunktion für das Erntegut für die Arbeitsphase, in der ein in der Preßkammer vorliegender, fertig gewickelter Rundballen in ein Bindemittel eingehüllt wird. Das Tennelement speichert das Erntegut, so daß die Rundballenpresse kontinuierlich weiterbetrieben werden kann.

Bei der Ausführungsform gemäß Anspruch 14 verformt sich das Trennelement in die Preßkammer hinein und unterstützt das Halten der Schlaufe in der Mindestgröße der Preßkammer. Außerdem hat das Trennelement den Vorteil, daß es zum Zwischenspeichern die Preßkammer mitbenutzt, obwohl diese noch zum Teil durch den gerade im Auswurf befindlichen Rundballen zumindest noch teilweise gefüllt ist. Sobald der Rundballen ausgeworfen und die Preßkammer wieder geschlossen ist, wird das Trennelement ausgezogen, das der Schlaufe den schon vorbereiteten Wickelkern übergibt.

Bei der Ausführungsform gemäß Ansrpuch 15 läßt sich das Trennelement mit der Halterung durch den Zuführkanal bewegen, um die weitere Zufuhr zur Preßkammer zumindest vorübergehend, d.h. zumindest bis zum endgültigen Schließen eines Bindemittels um den fertigen Rundballen, zu unterbrechen, dabei unter allmählichem Ausbeulen das weiterhin zugeführte Erntegut zwischenzuspeichern und danach unter dem Druck des Erntegutes bis in die Preßkammer hinein zu expandieren.

3

Wichtig ist in diesem Zusammenhang auch die Ausführungsform gemäß Anspruch 16, weil die Brems- und/oder Rückzugsvorrichtung die Verdichtung des Ernteguts beim Zwischenspeichern beeinflußt und den Zeitpuffer mitbestimmt, der zum endgültigen Schließen des Bindemittels um den Umfang des Rundballens zur Verfügung steht.

Schließlich ist auch Ausführungsform gemäß Anspruch 17 wichtig, weil die Preßwalze im Zuführkanal das beim Absperren des Zuführkanals weiterhin aufgenommene Erntegut verdichten hilft und so die Möglichkeit schafft, die Zwischenspeicherung trotz einer gegenüber den üblichen Abmessungen nicht veränderten Abmessung des Zuführkanals durchzuführen.

Anhand der Zeichnung werden Ausführungsformen des Erfindungsgegenstandes erläutert. Es zeigen:

Fig. 1 eine erste Ausführungsform einer Rundballenpresse mit variabler Preßkammer und starr gelagerten Walzen, mit leerer Preßkammer in geschlossener Stellung,

Fig. 2 eine zweite Ausführungsform einer Rundballenpresse mit variabler Preßkammer und schwimmend gelagerten Walzen, bei voller und geschlossener Preßkammer,

Fig. 3 eine Perspektiv-Schnittansicht eines Details, und

Fig. 4 eine weitere Ausführungsform einer Rundballenpresse mit in der Größe veränderlicher Preßkammer, in geschlossenem Zustand.

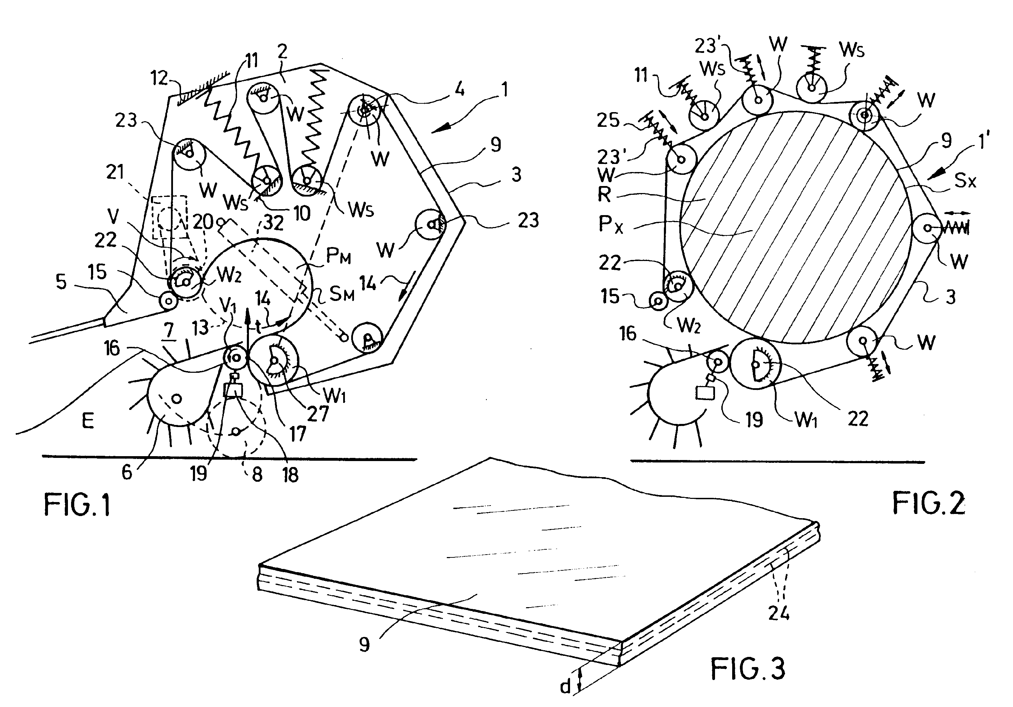

Eine erste Ausführungsform einer Rundballenpresse 1 gemäß Fig. 1, die in der Arbeitsphase nach Auswerfen eines fertigen Rundballens in geschlossenem Zustand und bei leerer Preßkammer gezeigt ist, weist einen stationären Pressenteil 2 und einen um eine Querachse 4 nach hinten aufklappbaren Preßkammerteil 3 auf. Am stationären Pressenteil 2 sind eine Zugdeichsel 5, eine Pick-up-Trommel 6 zum Aufnehmen des Ernteguts E sowie Laufräder 8 vorgesehen. Ein Zuführkanal 7 führt leicht ansteigend zur Preßkammer PM und mündet mit einem Einlaß 13 in diese. Die Preßkammer PM wird in dieser Arbeitsphase durch eine Schlaufe SM eines bandförmigen Preßelementes 9 begrenzt, das auf Walzen W, WS, W1 und W2 abgestützt und von diesen umgelenkt wird. Die Anzahl der Walzen W ist beliebig. Das Preßelement wird um die Walzen W1 und W2 umgelenkt, wobei die Walze W2 durch ein Antriebsrad 20 von einem Antrieb 21 in Wickelrichtung (Pfeil 14) antreibbar ist. Die Walzen WS, die durch Federn 11 zwischen festen Anschlägen 10 und 12 hin- und herbewegbar sind, dienen zum Erzeugen einer Zugspannung im Preßelement 9. Die Schlaufe SM begrenzt die Preßkammer PM in ihrer Mindestgröße, bei der die Spannwalzen WS an den Anschlägen 10 abgefangen sind.

Den Walzen W1, W2 sind Gegenwalzen 15, 16 zugeordnet, die Walzenspalte 17 zum Einklemmen des Preßelementes 9 bilden. Die Gegenwalze 15 liegt unterhalb einer Horizontalebene durch die Achse der Walze W2, während die Gegenwalze 16 oberhalb einer Horizontalebene durch die Achse der Walze W1 liegt. Auf diese Weise ist sichergestellt, daß eine Tangente t im Walzenspalt 17 zwischen der Gegenwalze 16 und der Walze W1 schräg ins Innere der Schlaufe SM gerichtet ist. Die Gegenwalze 16 steht mit einem Drehantrieb 18, vorzugsweise über eine Rutschkupplung 19, in Verbindung.

Das Preßelement 9 ist (Fig. 2) ein Gummi- oder Kunststoffband mit einer Dicke d von etwa 5 bis 10mm, das über die gesamte Preßkammerbreite durchgehend ausgebildet ist. Das Gummi- oder Kunststoffband ist zwar soweit biegsam, daß es die Umlenkung um die Walzen W1, W2 zuläßt, ist dabei aber so eigensteif ausgebildet, daß die Schlaufe SM in der Mindestgröße der Preßkammer PM nicht haltlos in sich zusammenfällt, sondern aufgrund der Eigensteifigkeit des Preßelementes 9 selbständig steht. Das Preßelement 9 ist zugfest und verschleißfest. Um die gewünschte Eigensteifigkeit zu erreichen, sind Verstärkungseinlagen 24 einvulkanisiert oder eingehaftet. Diese Verstärkungseinlagen können Kunststoffgewebe oder auch Metalldrähte oder -fasern sein, ähnlich den Verstärkungen von Keilriemen oder Gürteln von Reifen. Gegebenenfalls ist das Preßelement 9 in Querrichtung biegesteifer als in Längsrichtung.

Das Preßelement 9 wird in Fig. 1 mit der Wickelgeschwindigkeit V durch die Walze W2 angetrieben. Die Gegenwalze 16 wird vom Antrieb 18 mit einer Umfangsgeschwindigkeit V1 angetrieben, die höher ist als die Wickelgeschwindigkeit V. Es ergibt sich somit im Walzenspalt 17 zwischen der Gegenwalze 16 und der Wickelgeschwindigkeit V ein Geschwindigkeitsüberschuß V1 - V für den in die Schlaufe SM geförderten Abschnitt des Preßelementes 9 gegenüber dem durch die Walze W2 und ihre Gegenwalze 15 aus der Schlaufe SM abgezogenen Abschnitt des Preßelementes 9.

Die Walzen W1, W2 sind in stationären Festlagern 22 gelagert, wobei gegebenenfalls eines der Festlager 22 zum Erhöhen oder Verringern der Spannung im Preßelement 9 verstellbar ist. Die Walzen W sind bei der Ausführungsform gemäß Fig. 1 ebenfalls in Festlagern 23 gelagert. Zwischen dem stationären Pressenteil 2 und dem um die Achse 4 schwenkbaren Preßkammerteil 3 ist ein Arbeitszylinder 32 angedeutet, der zum Schließen der Preßkammer und zum Öffnen beim Auswerfen dient.

Die Rundballenpresse 1 gemäß Fig. 1 arbeitet wie folgt:

Das durch den Zuführkanal 7 zugeführte Erntegut E wird mit der Wickelgeschwindigkeit V in Wickelrichtung 14 zu einem Wickelkern eines neuen Rundballens geformt. Bei kontinuierlicher Zufuhr wächst die Schlaufe ausgehend von der minimalen Größe SM, wobei die Walzen WS gegen die Kraft der Federn in Richtung auf die Anschläge 12 verschoben werden. Unter dem Druck des wachsenden Rundballens R, dehnt sich die Schlaufe, bis sie schließlich an den Walzen W abgestützt wird (Fig. 2). Die Preßkammer P ist dann voll. Die Schlaufe hat ihre maximale Größe SX, die der maximalen Preßkammergröße PX entspricht. Die Spannung im Preßelement 9 kann, z.B., so gewählt sein, daß die Schlaufe nur leicht an den Walzen W anliegt und den Rundballen hauptsächlich durch die Bandspannung komprimiert. Dadurch bleibt der Rollwiderstand des Preßelementes an den Walzen W gering. Ist hingegen die Bandspannung, z.B., niedrig gewählt, so verdichten die Walzen W den Rundballen R in zunehmendem Maß, wobei ihr Reaktions-Druck von den Festlagern 23 aufgenommen und an die Pressenteile 2, 3 weitergeleitet wird.

Danach wird der Rundballen R auf nicht-dargestellte Weise in ein Bindemittel eingebunden, ehe der bewegliche Preßkammerteil 3 um die Querachse 4 nach hinten oben geschwenkt wird, bis der fertige Rundballen aus der Preßkammer herausfällt. Die Walzen WS erzeugen einen zusätzlichen Auswurfeffekt am Rundballen. Die Schlaufe wird beim Auswerfen gestreckt und hebt sich von den Walzen W ab. Die Spannwalzen WS fahren wieder in die in Fig. 1 gezeigte Position an die Anschläge 10. Bei der Entspannung des Preßelementes 9 kommt, sobald der Preßkammerteil 3 wieder geschlossen wird, die Gegenwalze 16 derart zur Wirkung, daß sie das Preßelement 9 zusammen mit der freilaufenden Walze W1 schneller in den Bereich des Einlasses 13 schiebt, als die Gegenwalze 15 mit der angetriebenen Walze W1 das Preßelement aus dem Einlaßbereich herauszieht. Durch die Lage der Gegenwalze 16 wird erreicht, daß das geschobene Preßelement mit einer gezielten Bewegungskomponente geführt wird, so daß die Schlaufe SM mit der Mindestgröße der Preßkammer PM zuügig und in der richtigen Form aufgebaut wird. Da die Schlaufenenden in den Walzenspalten zwischen den Gegenwalzen 16, 15 und den Walzen W1, W2 abgestützt werden, und da das Preßelement eigensteif ist, steht die Schlaufe in der in Fig. 1 angedeuteten Form und ist sogleich wieder bereit zur Aufnahme des Ernteguts. Darauf beginnt der Wickelvorgang in der vorerwähnten Weise von neuem.

Sobald die Schlaufe SM steht, geht die Rutschkupplung 19 der Gegenwalze 16 durch. Es wäre auch denkbar, den Walzenspalt 17 beim Aufbau des Rundballens dadurch zu öffnen, daß der sich aufbauende Druck in der Preßkammer das bewegbare Preßkammerteil 3 geringfügig um die Achse 4 verschwenkt und damit die Klemmung im Walzenspalt 17 lockert, damit die Gegenwalze 16 nicht zu stark reibt.

Fig. 2 zeigt das Endstadium des Wickelns des Rundballens R bei maximaler Größe der Schlaufe SX und maximaler Größe der Preßkammer PX, unmittelbar vor dem Hochschwenken des beweglichen Preßkammerteils 3.

In Fig. 2 wird gleichzeitig eine zweite Ausführungsform der Rundballenpresse 1' angedeutet, bei der Walzen W nicht wie in Fig. 1 in Festlagern, sondern in Loslagern 23' gehalten sind, derart, daß sie in radialer Richtung gegen Federn 25 beweglich sind. Die Walzen W haben dank dieser schwimmenden Lagerung die Möglichkeit, unter dem sich aufbauenden Druck des Rundballens nachzugeben, so daß der Rundballen R im wesentlichen durch die Spannung im Preßelement 9 verdichtet wird, während die Walzen nur geringfügigen Biegebelastungen unterworfen sind. Abhängig von der Spannung, die im innenliegenden Abschnitt herrscht, und deren Reaktionskräfte in Umfangsrichtung über die Festlager 22 der Walzen W1 und W2 aufgenommen werden, stellen sich die Walzen W selbsttätig ein. Die Spannwalzen WS sind nahe an die stationären Anschläge 12 oder direkt an diese herangefahren und halten die Spannung im Preßelement 9 mit. Dank der Eigensteifigkeit und der Zugfestigkeit des Preßelementes 9 wird so eine ausreichende Verdichtung im Rundballen 9 erreicht. Der Rollwiderstand beim Wickeln des Rundballens ist durch die schwimmende Lagerung verringert. Als weiterer Vorteil reicht eine relativ geringe Anzahl von Walzen W für das ordnungsgemäße Arbeiten aus, was die Kosten und das Gewicht der Rundballenpresse 1' verringert. Der weitere Aufbau der Rundballenpresse 1' entspricht dem der Rundballenpresse 1 von Fig. 1.

In Fig. 3 ist in einem Schnitt das Preßelement 9 angedeutet. Es ist ein Gummi- oder Kunststoffband mit einer Dicke d, die zwischen 5 und 10mm liegt. Verstärkungseinlagen 24 sind einvulkanisiert oder eingehaftet und tragen zum Erreichen der notwendigen Eigensteifigkeit sowie Zugfestigkeit bei.

Das Preßelement 9 mit seiner eigensteifen Ausbildung könnte auch eine biegsame Metallfolie, ein Drahtgeflecht, ein Kunststoffgewebe oder dgl. sein, gegebenenfalls mit einer Gummi- oder Kunststoffbeschichtung.

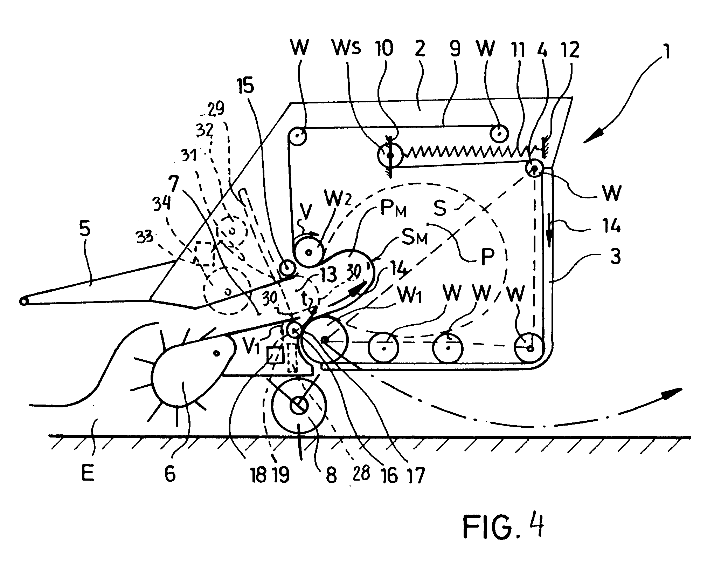

Die Ausführungsform der Rundballenpresse gemäß Fig. 4 ist bevorzugt für kontinuierlichen Betrieb geeignet, d.h. es kann auch bei relativ langer Zeit zum Eindbinden des fertigen Rundballens in ein Bindemittel zum Auswerfen des eingebundenen Rundballens das Erntegut weiter aufgenommen werden, weil es im Zuführkanal 7 und zum Teil auch in der Preßkammer zwischengespeichert wird, ohne mit dem fertigen Rollballen zu kollidieren. Gleiche Teile der Rundballenpresse 1 gemäß Fig. 1 sind mit den gleichen Bezugszeichen versehen wie die entsprechenden Teile der Rundballenpresse gemäß Fig. 1.

Im Unterschied zur Ausführungsform gemäß Fig. 1 sind bei Fig. 4 im Bereich des stationären Pressenteils 2, in dem die Gegenwalze 16 liegt, eine strichliert angedeutete Bindemittel-Eintragvorrichtung 28 angeordnet, mit der ein, z.B. netzbahnähnliches, nicht-gezeigtes, Bindemittel in die Preßkammer einführbar und um den fertigen Rollballen wickelbar ist, ehe dieser ausgeworfen wird. Damit beim Schließen des Bindemittels, d.h.,

sobald das freie Ende des Bindemittels den Einlaß 13 passiert, nicht weiterhin zugeführtes Erntegut E in die Preßkammer P gelangt, ist oberhalb des Zuführkanals 7 im stationären Pressenteil 2 eine quer durch den Zuführkanal 7 verschiebbare Halterung 29 für ein freies Ende 30 eines bahnförmigen Trennelementes 31 vorgesehen, das auf einem Speicher 32 aufgewickelt ist. Der Speicher 32 ist mit einer Brems- und/oder Rückzugsvorrichtung 33 für das Trennelement 31 verbunden. Im Zuführkanal 7 ist ferner für die Zwischenspeicherung eine Preßwalze 34 vorgesehen, die mit einem nicht-dargestellten Antrieb verbunden ist.

Kurz vor Schließen des mit der Bindemitteleintragvorrichtung 28 auf den Rundballen aufgebrachten Bindemittels, d.h., also sobald das vordere Ende des Bindemittels den Einlaß 13 erneut erreicht, wird die Halterung 29 quer durch den Zuführkanal 7 abgesenkt, bis das freie Ende 30 des Trennelementes 31, das mit der Halterung 29 lösbar verbunden ist, quer durch den Zuführkanal bewegt ist. Das Trennelement 31 sperrt dann die weitere Zufuhr des Ernteguts zur Preßkammer P, bis das Bindemittel geschlossen und gegebenenfalls ausreichend weit überlappt ist. Sobald dann der aufklappbare Preßkammerteil 3 geöffnet und mit dem Auswerfen des Rundballens begonnen wird, drückt das am Trennelement 31 anstehende und auch durch die Preßwalze 34 nachgeförderte Erntegut das Trennelement über die strichliert angedeutete Stellung 30' durch den Einlaß 13. Die Brems- und/oder Rückzugsvorrichtung 33 erzeugt im Trennelement, das eine flexible, zugfeste Bahn sein kann, eine entsprechende Rückhaltespannung, die das Trennelement nur ein vorbestimmtes Maß in die Preßkammer P hineinverformen läßt. Dabei gerät das Erntegut zunehmend unter Kompression, weil die Preßwalze 34 das Erntegut nachfördert und komprimiert. Es wird auf diese Weise ein Zeitpuffer erzeugt, der ausreicht, das Bindemittel zu schließen und den fertigen Rollballen auszuwerfen und den Preßkammerteil 3 wieder zu schließen. Das im Trennelement 31 enthaltene, im Zwischenspeicher komprimierte Erntegut kann auch eingesetzt werden, die Schlaufe SM mit der Mindestgröße der Preßkammer PM des Preßelementes 9 zu unterstützen. Es könnten dann die Gegenwalzen 15, 16 weggelassen werden, weil der Druck des nachgeförderten Ernteguts ausreicht, eine formstabile Schlaufe SM zu bilden.

Ist der aufklappbare Preßkammerteil 3 ordnungsgemäß geschlossen, dann wird die Halterung 29 zurückgezogen, so daß das freie Ende 30 des Trennelementes 31 freigegeben wird. Die Rückzugsvorrichtung 33 zieht das Trennelement 31 aus der Preßkammer PM zurück, ehe sich die Schlaufe SM des Preßelementes 9 unter dem Druck des Erntegutes wieder in Richtung auf die maximale Größer der Preßkammer P vergrößert.

Anstelle des Trennelementes 31 aus flexiblem Material könnte auch ein starres Trennelement, z.B. eine Platte oder eine Gabel quer durch den Zuführkanal 7 bewegt werden. Denkbar ist es auch, von oben und von unten jeweils Trennelemente vorübergehend durch den Zuführkanals zu schieben.

## Patentansprüche

1. Rundballenpresse (1, 1') mit einer Preßkammer (P) variabler Größe, deren Innenumfang bis auf einen Einlaß (13) für das Erntegut (E) von einer Schlaufe eines auf Walzen (W, W1, W2, WS) abgestützten endlosen bandförmigen Preßelementes (9) begrenzt wird, wobei wenigstens eine Walze (WS) derart beweglich gelagert ist, daß mit wachsendem Rollballen (R) die Schlaufe von einer Mindestgröße (PM) der Preßkammer anwächst, wobei die Schlaufe in der Mindestgröße an zwei Walzen (W1, W2) im Einlaßbereich (13) abgestützt ist, und mit wenigstens einem aufklappbaren Preßkammerteil (3) zum öffnen der Schlaufe und zum Auswerfen des Rundballens (R) **dadurch gekennzeichnet**, daß das Preßelement (9) ein einziges, mindestens über die Breite der Preßkammer (P) durchgehendes, eigensteifes Gummi- oder Kunststoffband ist, und daß die Schlaufe (SM) in der Mindestgröße (PM) durch die Eigensteifigkeit des Bandes steht.

2. Rundballenpresse nach Anspruch 1, **dadurch gekennzeichnet**, daß das Gummi- oder Kunststoffband verstärkende Einlagen (24) enthält.

3. Rundballenpresse nach den Ansprüchen 1 und 2, **dadurch gekennzeichnet**, daß das Preßelement (9) - zumindest in Längsrichtung - zugfest und in Querrichtung biegesteifer als in Längsrichtung ist.

4. Rundballenpresse nach den Ansprüchen 1 bis 3, **dadurch gekennzeichnet**, daß das Preßelement (9) unter einer den Rundballen in der Schlaufe komprimierenden und das Preßelement (9) von den Walzen (W) abhebenden bzw. entlastenden Zugspannung steht.

5. Rundballenpresse nach den Ansprüchen 1 bis 3, **dadurch gekennzeichnet**, daß das Preßelement (9) - zumindest beim Fertigpressen eines Rundballens - gegen in Drehrichtung des Rundballens (R) in Festlagern (23) abgestützten Walzen (W) andrückbar ist.

6. Rundballenpresse nach den Ansprüchen 1 bis 3 und 4, **dadurch gekennzeichnet**, daß die Walzen (W), ausgenommen die den Einlaß (13) zur Preßkammer (9) begrenzenden Walzen (W1, W2), - bezogen auf die Preßkammer - in zumindest radial beweglichen Loslagern (23'), vorzugsweise gefedert (25), schwimmend gehalten sind.

7. Rundballenpresse nach den Ansprüchen 1 bis 6, **dadurch gekennzeichnet**, daß den beiden Walzen (W1, W2) beiderseits des Einlasses parallele Gegenwalzen (15, 16) zugeordnet sind, die mit den Walzen (W1, W2) das Stehen der Schlaufe (SM) unterstützende Walzenspalte (17) für das Preßelement (9) bilden.

8. Rundballenpresse nach Anspruch 7, **dadurch gekennzeichnet**, daß wenigstens eine der Walzen (W2) beiderseits des Einlasses (13) in Wickelrichtung (14) des Rundballens (R) mit Wickelgeschwindigkeit (V) angetrieben wird und daß die in Wickelrichtung (14) vordere Gegenwalze (16) zumindest vorübergehend in Wickelrichtung (14) und mit einem Gechwindigkeitsüberschuß (V1 und V) gegenüber der Wickelgeschwindigkeit (V) antreibbar ist.

9. Rundballenpresse nach Anspruch 8, **dadurch gekennzeichnet**, daß die antreibbare Gegenwalze (16) derart nahe beim oder im Einlaß (13) angeordnet ist, daß eine Tangente (t) im Walzenspalt (17) zwischen der Gegenwalze (16) und der zugeordneten Walze (W1) ins Innere der Schlaufe (SM) gerichtet ist.

10. Rundballenpresse nach einem der Ansprüche 7 bis 9, **dadurch gekennzeichnet**, daß die antreibbare Gegenwalze (16) im stationären Pressenteil (2) und die zugeordnete, vorzugsweise freilaufende, Walze (W1) im aufklappbaren Preßkammerteil (3) angeordnet ist.

11. Rundballenpresse nach Anspruch 8, **dadurch gekennzeichnet**, daß zwischen dem Antrieb (18) und der Gegenwalze (16) eine, vorzugsweise einstellbare, Rutschkupplung (19) vorgesehen ist.

12. Rundballenpresse nach einem der Ansprüche 1 bis 7, **dadurch gekennzeichnet**, daß die antreibbare Gegenwalze (16) eine reibungsaktive Oberfläche aufweist.

13. Rundballenpresse nach den Ansprüchen 1 bis 12, **dadurch gekennzeichnet**, daß zum vorübergehenden Absperren des Zuführkanals (7) ein in den Zuführkanal (7) bewegbares, vorzugsweise bahnförmiges, Trennelement (31) vorgesehen ist.

14. Rundballenpresse nach Anspruch 13, **dadurch gekennzeichnet**, daß das Trennelement (31) unter Zwischenspeichern des Erntegutes (P) im Zuführkanal (7) durch den Einlaß (13) in die Preßkammer (P, PM) verformbar ist, und daß die Schlaufe (SM) in der Mindestgröße der Preßkammer durch das verformte Trennelement (31) abstützbar ist.

15. Rundballenpresse nach den Ansprüchen 13 und 14, **dadurch gekennzeichnet**, daß eine Halterung (29) für das freie Ende (30) des Trennelementes (31) vorgesehen ist, mit der das freie Ende (30) lösbar verbunden ist, und daß die Halterung (29) mit dem freien Ende (30) des Trennelementes (31) aus einer zurückgezogenen Stellung quer durch den Zuführkanal (7) in eine Sperrstellung und unter Freigeben des freien Endes wieder in die zurückgezogene Stellung bewegbar ist, worauf das Trennelement aus dem Zuführkanal heraus bewegt wird.

16. Rundballenpresse nach Anspruch 15, **dadurch gekennzeichnet**, daß für das Trennelement (31) eine Brems- und/oder Rückzugsvorrichtung (33) vorgesehen ist.

17. Rundballenpresse nach den Ansprüchen 13 bis 16, **dadurch gekennzeichnet**, daß im Zuführkanal (7) eine wenigstens für die Zwischenspeicherung des Erntegutes bei abgesperrtem Zuführkanal verwendbare Preßwalze (34) vorgesehen ist.

## Claims

1. Rotobaler (1, 1') having a press chamber (P) of variable size, the inner periphery of which, apart from an inlet (13) for the crop (E), is bounded by a loop of an endless belt-shaped press element (9) supported on rollers (W, W1, W2, WS), at least one roller (WS) being movably mounted in such a way that, as the roll bale (R) grows, the loop increases in size from a minimum size (PM) of the press chamber, the loop in the minimum size being supported against two rollers (W1, W2) in the inlet area (13), and having at least one swing-out press chamber part (3) for the opening of the loop and for the ejection of the round bale (R), **characterised in that** the press element (9) is a single, naturally stiff rubber or plastic belt, extended continuously at least across the width of the press chamber (P), and in that the loop (SM) in the minimum size (PM) stands erect as a result of the natural stiffness of the belt.

2. Rotobaler according to Claim 1, **characterised in that** the rubber or plastic belt contains reinforcing inlays (24).

3. Rotobaler according to Claims 1 and 2, **characterised in that** the press element (9) - at least in the longitudinal direction - is tension-resistant and is more resistant to bending in the transverse direction than in the longitudinal direction.

4. Rotobaler according to Claims 1 to 3, **characterised in that** the press element (9) is subjected to a tensile stress which compresses the round bale in the loop and raises or relieves the press element (9) from the rollers (W).

5. Rotobaler according to Claims 1 to 3, **characterised in that** the press element (9) - at least in finish-compressing of a round bale - can be forced against rollers (W) which are supported in fixed bearings (23).

7

6. Rotobaler according to Claims 1 to 3 and 4, **characterised in that** the rollers (W), with the exception of the rollers (W1, W2) bounding the inlet (13) to the press chamber (9) - in relation to the press chamber - are floatingly held in at least radially movable loose bearings (23'), preferably spring-loaded (25).

7. Rotobaler according to Claims 1 to 6, **characterised in that** the two rollers (W1, W2) are allocated, on both sides of the inlet, parallel counter-rollers (15, 16), which form, with the rollers (W1, W2), roller gaps (17), supporting the erect standing of the loop (SM), for the press element (9).

8. Rotobaler according to Claim 7, **characterised in that** at least one of the rollers (W2) on both sides of the inlet (13) is driven in the direction of winding (14) of the round bale (R) at a winding velocity (V) and in that the front counter-roller (16) in the direction of winding (14) can be driven at least temporarily in the direction of winding (14) and at an excess velocity (V1 and V) by comparison with the winding velocity (V).

9. Rotobaler according to Claim 8, **characterised in that** the drivable counter-roller (16) is disposed in such a way next to or in the inlet (13) that a tangent (t) in the roller gap (17) between the counter-roller (16) and the associated roller (W1) is pointed into the interior of the loop (SM).

10. Rotobaler according to one of Claims 7 to 9, **characterised in that** the drivale counter-roller (16) is disposed in the stationary press part (2) and the associated, preferably free-running, roller (W1) is disposed in the swing-out press chamber part (3).

11. Rotobaler according to Claim 8, **characterised in that** a, preferably adjustable, slipping clutch (19) is disposed between the drive mechanism (18) and the counter-roller (16).

12. Rotobaler according to one of Claims 1 to 7, **characterised in that** the drivable counter-roller (16) exhibits a friction-active surface.

13. Rotobaler according to Claims 1 to 12, **characterised in that**, for the temporary closing-off of the supply channel (7), a dividing element (31) which is movable into the supply channel (7) and is preferably strip-shaped is provided.

14. Rotobaler according to Claim 13, **characterised in that**, while the crop (P) (sic) is being stored intermediately in the supply channel (7), the dividing element (31) can be distorted through the inlet (13) into the press chamber (P, PM), and in that the loop (SM) in the minimum size of the press chamber can be supported by the distorted dividing element (31).

15. Rotobaler according to Claims 13 and 14, **characterised in that** a fixture (29) is provided for the free end (30) of the dividing element (31), to which fixture the free end (30) is detachably connected, and in that the fixture (29), with the free end (30) of the dividing element (31), can be moved out of a retracted position transversely through the supply channel (7) into a locked position, the free end being released back into the retracted position, whereupon the dividing element is moved out of the supply channel.

16. Rotobaler according to Claim 15, **characterised in that** a braking and/or retraction device (33) is provided for the dividing element (31).

17. Rotobaler according to Claims 13 to 16, **characterised in that** a press roller (34), which can be used at least for the intermediate storage of the crop when the supply channel is closed off, is provided in the supply channel (7).

**Revendications**

1. Presse à balles rondes (1, 1') possédant une chambre de pressage (P) de dimension variable, dont la circonférence intérieure est délimitée, à l'exception d'une entrée (13) recevant le produit récolté (E), par une boucle d'un élément de pressage (9) sans fin, en forme de bande, qui est appuyé sur des rouleaux (W, W1, W2, WS), au moins un rouleau (WS) étant monté mobile de telle manière que, lorsque la balle ronde (R) croît, la boucle s'agrandisse à partir d'une dimension minimale (PM) de la chambre de pressage, la boucle étant appuyée dans la dimension minimale contre deux rouleaux (W1, W2) prévus dans la région d'entrée (13), et possédant au moins une partie relevable (3) de chambre de pressage permettant d'ouvrir la boucle et d'éjecter la balle ronde (R), **caractérisée en ce que** l'élément de pressage (9) est constitué par une unique bande de caoutchouc ou de matière plastique possédant une rigidité propre, qui est continue sur la largeur laterale de la chambre de pressage (P), et en ce que la boucle (SM) se tient dans l'état de dimension minimale (PM) sous l'effet de la rigidité propre de la bande.

2. Presse à balles rondes selon la revendication 1, **caractérisée en ce que** la bande en caoutchouc ou matière plastique renferme des insertions de renforcement (24).

3. Presse à balles rondes selon les revendications 1 et 2, **caractérisée en ce que** l'élément de pressage (9) est résistant à la traction - du moins dans la direction longitudinale - et est plus rigide en flexion dans la direction transversale que dans la direction longitudinale.

4. Presse à balles rondes selon les revendications 1 à 3, **caractérisée en ce que** l'élément de pressage (9) est sous une contrainte de traction qui comprime la balle ronde contenue dans la boucle et qui soulève l'élément de pressage (9) des rouleaux (W) ou décharge ces rouleaux.

5. Presse à balles rondes selon les revendications 1 à 3, **caractérisée en ce que** l'élément de pressage (9) peut être pressé - du moins au cours du pressage final d'une balle ronde - contre des rouleaux (W) qui prennent appui dans les paliers fixes (23).

6. Presse à balles rondes selon les revendications 1 à 3 et 4, **caractérisée en ce que** les rouleaux (W) à l'exception des rouleaux (W1, W2) qui limitent l'entrée (13) donnant dans la chambre de pressage (9) sont tenus flottants - relativement à la chambre de pressage - dans des paliers libres (23') pouvant se déplacer au moins dans la direction radiale, qui sont de préférence montés sur ressorts (25).

7. Presse à balles rondes selon les revendications 1 à 6, **caractérisée en ce qu'**aux deux rouleaux (W1, W2) situés des deux côtés de l'entrée sont associés des rouleaux conjugués (15, 16) parallèles, qui, en combinaison avec les rouleaux (W1, W2), forment la fente entre rouleaux (17) de passage de l'élément de pressage (9), qui favorise la tenue de la boucle (SM).

8. Presse à balles rondes selon la revendication 7, **caractérisée en ce qu'**au moins un des rouleaux (W2) situé des deux côtés de l'entrée (13) est entraîné dans le sens (14) de l'enroulement de la balle ronde (R) avec une vitesse d'enroulement (V) et en ce que le rouleau conjugué (16), qui est en position avant dans le sens d'enroulement (14) peut être entraîné, du moins temporairement dans le sens (14) de l'enroulement, avec un excédent de vitesse (V1 et V2) comparativement à la vitesse d'enroulement (V).

9. Presse à balles rondes selon la revendication 8, **caractérisée en ce que** le rouleau conjugué (16) pouvant être entraîné est disposé à proximité de l'entrée (13) ou dans cette entrée, de telle manière qu'une tangente (t) tracée dans la fente entre rouleaux (17) formée entre le rouleau conjugué (16) et le rouleau (W1) qui lui est associé, soit dirigée vers l'intérieur de la boucle (SM).

10. Presse à balles rondes selon une des revendications 7 à 9, **caractérisée en ce que** le rouleau conjugué (16) pouvant être entraîné est disposé dans la partie fixe (2) de la presse et le rouleau (W1) qui lui est associé, et qui est de préférence tournant fou, est agencé dans la partie relevable (3) de la chambre de pressage.

11. Presse à balles rondes selon la revendication 8, **caractérisée en ce qu'**il est prévu un embrayage à glissement (19), de préférence réglable, entre le dispositif d'entraînement (18) et le rouleau conjugué (16).

12. Presse à balles rondes selon une des revendications 1 à 7, **caractérisée en ce que** le rouleau conjugué (16) pouvant être entraîné présente une surface de frottement actif.

13. Presse à balles rondes selon les revendications 1 à 12, **caractérisée en ce que**, pour fermer temporairement le canal d'amenée (7), il est prévu un élément séparateur (31), de préférence en forme de bande, que l'on peut introduire dans le canal d'amenée (7).

14. Presse à balles rondes selon la revendication 13, **caractérisée en ce que** l'élément séparateur (31) peut se déformer à travers l'entrée (13) en s'engageant dans la chambre de pressage (P, PM) avec accumulation intermédiaire de produit récolté (P) dans le canal d'amenée (7) et en ce que la boucle (SM) peut être soutenue par l'élément séparateur (31) déformé dans l'état de dimension minimale de la chambre de pressage.

15. Presse à balles rondes selon les revendications 13 et 14, **caractérisée en ce qu'**il est prévu un support (29) pour l'extrémité libre (30) de l'élément séparateur (31), support auquel l'extrémité libre (30) est reliée par une liaison démontable, et en ce le support (29), avec l'extrémité libre (30) de l'élément séparateur (31) peut se déplacer d'une position rétractée à une position de fermeture, en se déplaçant transversalement à travers le canal d'amenée (7), puis revenir à la position rétractée en libérant l'extrémité libre, à la suite de quoi l'élément séparateur est extrait du canal d'amenée.

16. Presse à balles rondes selon la revendication 15, **caractérisée en ce qu'**il est prévu un dispositif de freinage et/ou de retrait (33) pour l'élément séparateur (31).

17. Presse à balles rondes selon les revendications 13 à 16, **caractérisée en ce qu'**il est prévu dans le canal d'amenée (7) un rouleau de pressage (34) qui peut être utilisé pour l'accumulation intermédiaire du produit récolté lorsque le canal d'amenée est fermé.

FIG.1

FIG.2

FIG.3

EP 0 331 872 B1

FIG. 4